Europäisches Patentamt

(19) European Patent Office

Office européen des brevets

(11) Publication number: **0 033 237**
**A1**

(12) **EUROPEAN PATENT APPLICATION**

(21) Application number: **81300316.7**

(22) Date of filing: **23.01.81**

(51) Int. Cl.³: **H 04 B 9/00**
**H 04 J 3/04, G 01 S 15/34**

(30) Priority: **24.01.80 US 114914**

(43) Date of publication of application:
**05.08.81 Bulletin 81/31**

(84) Designated Contracting States:
**DE FR GB IT**

(71) Applicant: **SPERRY CORPORATION**
**1290, Avenue of the Americas**
**New York, N.Y. 10019(US)**

(72) Inventor: **McMahon, Donald Howland**
**Judy Farm Road**
**Carlisle Massachusetts 01741(US)**

(74) Representative: **Michaels, Peter Albert**
**SPERRY UNIVAC Patent & Licensing Services M.S. S2**
**W1 SPERRY UNIVAC CENTRE**
**London NW10 8LS(GB)**

(54) Information gathering system multiplexing apparatus.

(57) An information gathering system has a plurality of sensors (14a to 14n) whose outputs are passively multiplexed for transmission to a common receiver (17,18,19). The sensors (14a to 14n) are coupled to a common transmission line (13) by means of spaced couplers (15a to 15n) to receive, modify and return a portion of a modulated carrier signal. The consequent difference in propagation path lengths results in a sequence of time separable pulses being received at the receiver (17, 18,19).

The carrier signal may be an optical signal provided by a laser (11), the transmission line an optical fibre (13), and the sensors (14 to 14n) reflective or transmissive acousto-optic transducers.

EP 0 033 237 A1

./...

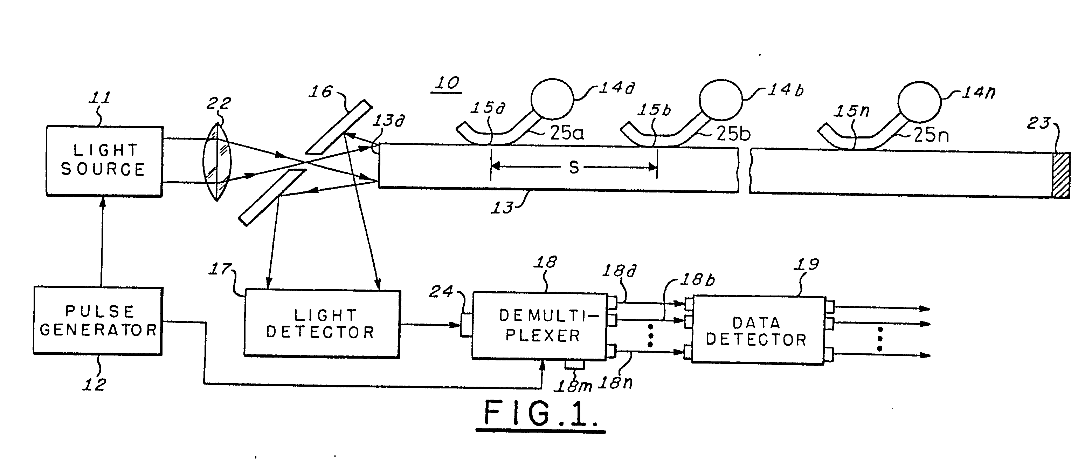

$\underline{FIG.1.}$

-1-

## Information Gathering System Multiplexing Apparatus

The present invention relates to information gathering systems with a plurality of sensors, and to multiplexing arrangements therefor.

In an information gathering system such as, for example, an underwater target locating system, it may be necessary to transmit information outputs from a plurality of acoustic sensors to a collective receiving station. Although underwater target locating systems may utilize active acoustic devices which comprise a radiation source and a sensor to detect reflected sound waves, the use of passive devices which detect sound waves emanating from distant sources will be more suitable for certain applications. The type of information obtained with the aid of active and passive systems is largely the same; mainly, these systems are capable of determining relative positions of one or more of dispersed discrete targets in a quiescent water ambient. Since a target position cannot be determined with a single passive acoustic sensor (hydrophone), a passive system requires a plurality of hydrophones, the minimum number being three of which one is positioned at each of the vertices of a triangle. The relative position of a target is determined by frequency filtering out the target signal received at each sensor from the background noise, determining the relative signal phases at the sensors, and processing this phase information to obtain the relative range and angle location. Large numbers of hydrophones, typically from a hundred to a thousand are utilized in one or two dimensional arrays to provide both sufficient signal sensitivity in the presence of ambient noise and the desired angular resolution over a broad acoustic frequency band.

Heretofore, hydrophones have been used which employ piezolelectric crystal transducers to transform acoustic signals into electric signals by converting pressure variations applied to the crystal into corresponding voltage variations across electrodes positioned on opposite sides of the crystal. These transducers usually supply only very small voltages at very high output impedance levels. Consequently, each transducer will need to be coupled to a nearby amplifier which amplifies the signal and transforms the high output impedance of the transducer into a low output impedance which is coupled to appropriate input terminals of a transmission line, for instance a coaxial cable. Such acoustically passive hydrophone arrays are often intended for long distance covert sensing. Since the attenuation of acoustic waves in water increases rapidly with increasing frequency, the operating frequency band of an acoustically passive sensing array will usually be limited to be within the range from 10Hz to 10kHz. The bandwidth capability of coaxial cables is significantly greater than 10kHz, a characteristic which may be utilized to reduce the number of cables employed in the array. Coaxial cables exhibit signal attenuations of from 20 to 200dB/km for an operating bandwidth of 100MHz and from 2 to 20dB/km for an operating bandwidth of 10MHz. The 10MHz bandwidth is appropriate if the signals propagated along the coaxial cable are of limited strength and the length of the cable exceeds 1km. As is readily apparent, with this cable bandwidth approximately one thousand 10kHz bandwidth signals can be transmitted over the same cable.

Electric power for the transimpedance amplifiers and for multiplexing the output of several acoustic sensors onto one transmission line must all be transmitted through a sensor cable network which must also include the coaxial cable for returning the multiplexed signals to a common processing point. If the sensors are dispersed, a transimpedance amplifier must be located adjacent to each in order to establish a sufficiently large signal to noise ratio for sensitive signal detection at the processing point. Coupling apparatus for injecting the amplified electric signal from each transducer onto the coaxial cable without disturbing the signals from all the other transducers must also be provided. This injection may be achieved by modulating a carrier signal at an assigned frequency within the 10MHz bandwidth with the electric signal generated at the output terminal of a transducer in response to a received acoustic signal, and coupling this modulated carrier signal via a T junction and a tuned amplifier onto the coaxial cable. It is, then, quite clear that the afore-mentioned prior art acoustic sensor arrays make for fairly elaborate systems comprising acoustic-to-electric signal transducers, electronic circuits for impedance conversion and for multiplexing, power carrying cables, coaxial cables for the propagation of electric signals, and mechancial support structures.

In another known system, the emissions of a multiplicity of lasers, each operating at a distinct optical wavelength, are combined by a colour ( i.e. wavelength) multiplexer for transmission over a common optical fibre. Colour filters (demultiplexers) positioned at acousto-optic transducers which is to say the hydrophones, couple each colour to its assigned sensor. The optical signals are modulated by the sensors and are then coupled onto a fibre (remultiplexed), along which they propagate jointly to a common receiving location where the colours are again separated (demultiplexed) to obtain individual hydrophone signals. This type of optical multiplexing employs one laser (light source), one detector, and at least one multiplexer unit for each sensor and is limited to low multiplexing ratios. Although simpler in that it permits passive multiplexing, it compares unfavourably with the other prior art multiplexing arrangements in terms of complexity and cost. Colour multiplexing, moreover, does not utilize the available channel capacity effectively.

In outline, the present invention relates to an information gathering system in which a plurality of sensor outputs is multiplexed by being coupled to signal propagation paths of different lengths. To this end, the sensors may be coupled to a signal transmission line at sequential positions therealong, and the data modulated signals from each sensor may be multiplexed onto this or another transmission line to be returned to a common port at which they are demultiplexed on a time of arrival basis.

A signal, which may for instance be an optical signal, is coupled to the transmission line from which portions of the signal are sequentially coupled to branch lines positioned along the transmission line for propagation to the sensors. At the sensors, the coupled signals are modulated in accordance with sensed data and returned to the transmission line whereon the data modulated signals sequentially propagate to the common port. Each signal path, from the source to a sensor to the common port, is chosen to establish a specific time delay which is different from all other time delays generated by the signal paths to all other sensors.

This time delay difference between the signals from the sensors is used to separate the signals upon arrival at the common port. To permit separation of the arriving signals the source signal may be pulse modulated to create time separable return pulses from the sensors. Another possibility is to amplitude modulate the source signal with a variable frequency (FM) signal for which the frequency variation is linear with respect to time and mixing the returned signals with the modulating signal to obtain a separate beat frequency for each sensor.

Accordingly, no electrical power is required to operate the sensors, or at the data signal injection taps for multiplexing, while at the same time a need for plurality of signal sources, and the associated demultiplexer at each sensor location, as required by other prior art, is avoided.

The invention will be described further with reference to specific embodiments shown the accompanying drawings of which:-

Figure 1 and Figure 2 are block diagrams of two different embodiments employing optical signal transmission, of a sensing array using the invention;

Figure 3 is a block diagram of an illumination and demultiplexing system which may be utilized in the embodiments of Figures 1 and 2;

Figure 4 presents waveforms useful in explaining the operation of the invention; and

Figure 5 is a block diagram of an alternative illumination and demultiplexing system which may be utilized in the embodiments of Figures 1 and 2.

The transmission of a multiplicity of signals over a single transmission line may be realised by time division multiplexing, that is by sequentially coupling each signal to propagate along the transmission line for an assigned time-span during which other signals do not propagate. Heretofore, this time division multiplexing would have been accomplished electronically by switchably coupling the signals to the transmission line in a sequential manner for propagation to a receiving location, at which they would have been switchably separated in accordance with the arrival times and thereafter individually processed. However, as long as each signal propagates along the transmission line with equal speed, the established time separation is maintained during transit to the receiving station. If, therefore, a signal is coupled to a transmission line, and if devices which, for instance, reflect incident signals back towards the transmitting end, are positioned at various locations along the transmission line, the reflections from these devices will arrive at the original transmitting end with time separations therebetween that are functions of the distance between the reflection devices and the velocity of propagation along the transmission line. Thus, assuming the utilization of reflecting devices that act to modulate the intensity of the source signal, the finite signal propagation velocity on a transmission line may be utilized to achieve time division multiplexing without using electrically active components.

For instance, an optical fibre may have a refractive index of 1.5 along which light propagates at a speed of $2 \times 10^8$ m/sec with a pulse disperson of less than $10^{-9}$ seconds for a specified length of fibre with reflecting devices being coupled to the fibre at intervals of 0.1m. Signals reflected from these devices can be resolved if an optical pulse with a $10^{-9}$ seconds duration (systems bandwidth=1GHz) is transmitted along the fibre to be incident at each reflecting device. Signal resolution may be maintained and the pulse width increased (system bandwidth decreased) if the separation between reflecting devices is increased. For example, intervals of one meter will allow return pulses from the reflecting devices of substantially $10^{-8}$ seconds duration to be resolved.

Referring now to Figure 1, an optical passive time division multiplexing system 10 includes an optical source 11, an electric pulse generator 12, an optical fibre transmission line 13, coupled to receive pulses of optical carrier signals from the source 11, and a multiplicity of optical reflecting devices 14a to 14n which are coupled to the optical fibre 13 via respective couplers 15a to 15n and branch lines 25a to 25n. A mirror 16 is positioned to reflect optical signals emerging from the transmission line 13 to a light detector 17. The electrical ouput of detector 17 is coupled to a demultiplexer 18 which is also coupled to receive pulses from pulse generator 12. Output signals from the demultiplexer 18 are coupled to a data detector 19, the output terminals of which are coupled to utilization devices not shown. The data detector 19 will include peak holding circuits and low pass filters.

The source 11 is a laser such as a cavity pumped Nd-YAG laser system operating at 1.06 um which is pulse modulated by the pulse generator 12 to emit a sequence of short duration light pulses of a pulse width and duty cycle to be described below, which are focussed by a focusing lens 22 through an appropriate aperture in the mirror 16 on to the endface 13a of the optical fibre 13. The pulsed optical carrier signals thus coupled to the optical fibre 13 propagate therealong to be sequentially incident on optical directional couplers 15a to 15n. Although optical fibre can be manufactured which possess low optical attenuation characteristics, they do exhibit dispersive characteristics that cause the time duration of an optical pulse to increase as the pulse propagates along the fibre In so-called multimode step index fibre the pulse dispersion is primarily a function of the variation of the refractive index of the fibre with optical wave length and the axial velocity of the optical signals incident on the fibre at angles within the finite range defined by the fibre numerical aperture. Wave length dispersion may be largely eliminated with the use of a mono-chromatic light source for generating the short duration light pulses. The numerical aperture dispersion cannot be completely eliminated, but may be greatly reduced by an optical fibre with a graded refractive index i.e. a fibre manufactured such that the refractive index continuously decreases quadratically as the radial distance from the center increases. Graded index fibre possessing pulse dispersions less than one nanosecond per kilometer are commercially available. Thus, a useful bandwidth for a kilometer of graded index multi-mode fibre is 1 GHz and pulse resolution in the order of one nanosecond may be achieved over a kilometer of graded index multi-mode fibre. A 1GHz bandwidth then permits the multiplexing of 100,000 signals each having a bandwidth of 10kHz.

The optical pulses propagating along the fibre 13 are sequentially coupled to the optical reflectors 14a to 14n, here the sensor elements of a sonar array, via optical directional couplers 15a to 15n. The couplers 15a to 15n may be of the type disclosed by Hill et al. in a letter entitled "Efficient Power Combiner for Multiplexing Sources to Single Fiber Optical Systems", published in Applied Physics Letters Volume 31, 1 December 1977, and the optical reflectors 14a to 14n may be sensors of the type disclosed in an article entitled "An FTIR Multimode Fibre-Optic Hydrophone" by W. B. Spillman et al., published in "Applied Optics" Vol. 19, page 113, of January 1980. Optical pulses incident on each reflector device experience amplitudes variations in acordance with the variance of the reflection coefficient induced in the reflectors 14a to 14n. These amplitude modified optical pulses are directionally coupled to the fibre 13 to propagate towards the mirror 16, arriving thereat in the time sequence determined by the order and the spacing intervals of the optical reflectors 14a to 14n. This sequence of pulses commences with the returning pulse from reflector 14a, followed, in order, by the return pulses from reflectors 14b to 14n, with time spacings therebetween substantially equal to 2s/c, s being the spacing interval between directional couplers and c being the velocity of light in the fibre when the length of the fibre 25a to 25n between the directional couplers 15a to 15n and the optical reflectors 14a to 14n respectively, are substantially equal. The sequence of optical pulses returned to the end face 13a from the optical reflectors 14a to 14n for each transmitted optical pulse from source 11, are reflected by mirror 16 to detector 17 for conversion to a corresponding sequence of electrical pulses. This sequence of electrical pulses is then coupled to the input terminal 24 of the demultiplexer 18. The demultiplexer 18 has output terminals 18a to 18n each of which corresponds to one of the optical reflectors 14a to 14n. With each optical pulse emitted from source 11, the demultiplexer 18 receives a pulse from the pulse generator 12 and thereafter sequentially couples the input terminal 24 to one of the ouput terminals 18a to 18n so that each output terminal is coupled to the input terminal 24 once for each optical pulse emission. The timing sequence is arranged such that the electrical pulse derived from the optical pulse reflected by one of the optical reflectors 14a to 14n is coupled to the corresponding one of the ouput terminals 18a to 18n. This coupling sequence is repeated for each optical pulse emitted, and thus a sequence of pulses of varying amplitudes representative of the induced time-varying reflection coefficient of the reflectors, is coupled to each output terminal 18a to 18n of demultiplexer 18, thereby establishing a data sample channel for each of the optical reflectors 14a to 14n. Each data sample channel is coupled to data detector 19 in which the data in each channel is smoothed to eliminate the pulse repetition frequency, and is made available to a utilization device not shown.

The termination 23 of the optical fibre 13 may be a mirror from which the remaining pulse energy is reflected, to be detected by the light detector 17 and coupled to output terminal 18m of demultiplexer 18 as an unmodulated sequence of pulses at the modulator pulse repetition frequency. Each pulse in this unmodulated sequence is the final return of the stream of reflected pulses resulting from a pulse incident on the fibre 13 from the source 11 and may be utilized, in some applications, to aid in compensating for optical signal losses at taps 15a to 15n and to resolve ambiguities caused by round trip time delays from reflectors positioned near the end of the fibre that exceed the period between optical pulses. In other applications these final returns are not required and the termination 23 of the optical fibre 13 may be a light absorbing material which absorbs substantially all the optical energy incident thereon.

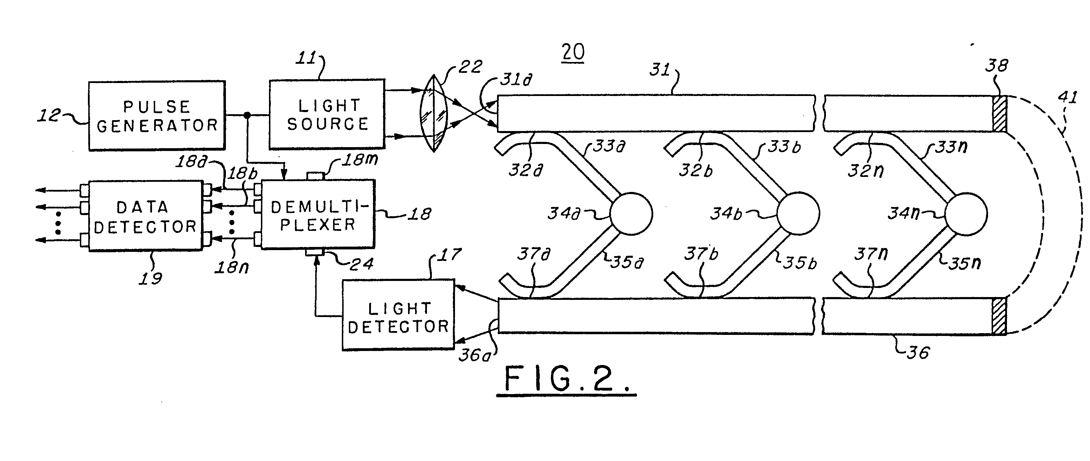

Figure 2, wherein elements bear the same reference numerals as the corresponding elements in Figure 1, illustrates an embodiment 20 of the invention which utilizes optical devices having variable optical transmission characteristics caused by a mechanism sensitive to ambient changes. Pulsed optical carrier signals from source 11 may be focussed by lens 22 onto end face 31a to propagate along a first optical fibre 31. When the optical pulse arrives in the coupling region of directional coupler 32a, a portion of the pulse energy is coupled from the optical fibre 31 to a branch optical fibre 33a and propagates therealong to an optical transmission modulator 34a. The pulse incident on the transmission modulator 34a is coupled therethrough and emerges with an intensity which is a function of the instantaneous optical attenuation coefficient of the optical transmission device 34a. It then propagates along a second branch optical fibre 35a, from which it is coupled to a second main optical fibre 36 via a directional coupler 37a for propagation to the end face 36a thereof. In the mean time the optical pulse propagating along the first fibre 31 continues to propagate with reduced intensity beyond the coupling region 32a and upon arrival at the coupling region of directional coupler 32b a portion of the remaining pulses energy is coupled to transmission modulator 34b via fibre 33b and hence to the optical fibre 36 via fibre 35b and directional coupler 37b for propagation towards the end face 36a. The optical pulse continues to propagate along fibre 31 with successively reduced intensity and is successively coupled from fibre 31 in the manner described until the last coupler-modulator combination is transversed. The optical energy remaining thereafter may either be absorbed in a termination 38 or may be propagated through a fibre 41 (shown in broken outline) and be coupled therefrom on to fibre 36 to propagate therealong as the final pulse in a sequence of pulses. The various couplings between fibre 31 and 36 cause a sequence of pulses to arrive at the end face 36a of fibre 36 with spacings therebetween that are functions of the difference in the path lengths for each pulse. This sequence of optical pulses emerges from end face 36a and is incident on the light detector 17. The resulting electrical signal is subsequently processed by the demultiplexer 18 and data detector 19 in the manner previously described with reference to Figure 1.

Each one of the directional couplers 32a to 32n and 37a to 37n may be of the type described by Hill et al. The transmissive modulators 34 to 34n, in one application of the invention, may be sensors in a sonar array with each being of the type disclosed in a letter entitled "A Schlieren Multimode Fibre-Optic Hydrophone" by W. B. Spillman et al., published in "Applied Physics Letters" Vol. 37, No. 2, of 15 July 1980, on page 145. This type of transducer transmits optical signals and provides an output signal intensity which is a function of the instantaneous pressure that is incident on the transducer.

If the data modulating elements 14a to 14n and 34a to 34n in Figures 1 and 2 respectively are elements of a sonar array with uniform directional coupler spacings along the fibre and uniform element spacings in the water each equal to 0.1 meters, then the spacing limits the highest acoustic wavelength that may be monitored without ambiguity to substantially 0.1m which, for a velocity of sound in water equal $1.5 \times 10^3$ meters per second, corresponds to a maximum frequency of 15kHz. Higher frequencies may be monitored by reducing the spacing of the transducers in the water and coiling or folding the fibre between the couplers to maintain the 0.1m spacing therebetween and concomitantly maintain the optical signal resolution previously described. The rate at which the sensors may be sampled without end of sequence processing, is determined by the time delay along the fibre between the closest and farthest sensors from the light source i.e. the shortest and the longest propagation paths. A transducer bandwidth of 10kHz and a desired sampling rate of 100kHz limits the maximum array length L to $10^3$ meters according to the formula:

$$(L = \frac{c}{2f} = 2 \times 10^8 / 2 \times 10^5)$$

This maximum array length may be increased to $5 \times 10^3$ meters if the sampling rate is reduced to the minimum rate of twice the transducer bandwidth, which is 20KHz for this example.

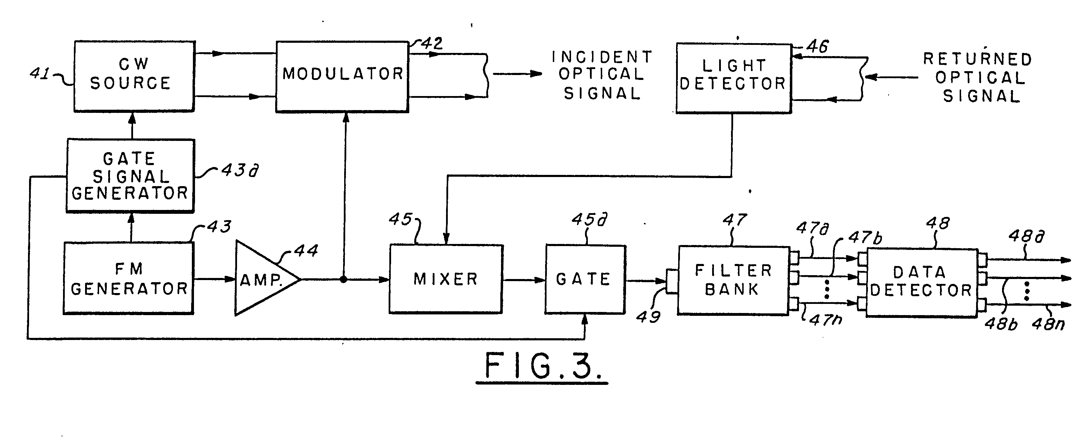

In another example of the invention a linear FM signal is utilized to intensity, or amplitude, modulate the light emission from a cw (continuous wave) source. Referring to Figure 3, the transmission and receiving systems of this embodiment comprise a cw light source 41, such as a laser, a modulator 42, which may be of a known electro-optic or acousto-optic type coupled to receive emissions from the source 41, an FM signal generator 43 coupled to an amplifier 44, the output terminal of which is coupled to provide a modulating signal to modulator 42 and an instantaneous local oscillator signal to a mixer 45. The electric signal output of a light detector 46 is coupled to a second terminal of mixer 45, the output terminal of which is coupled to the input terminal of a filter bank 47. The filter bank 47 possesses a multiplicity of output terminals each of which is coupled to a corresponding input terminal of data detector 48.

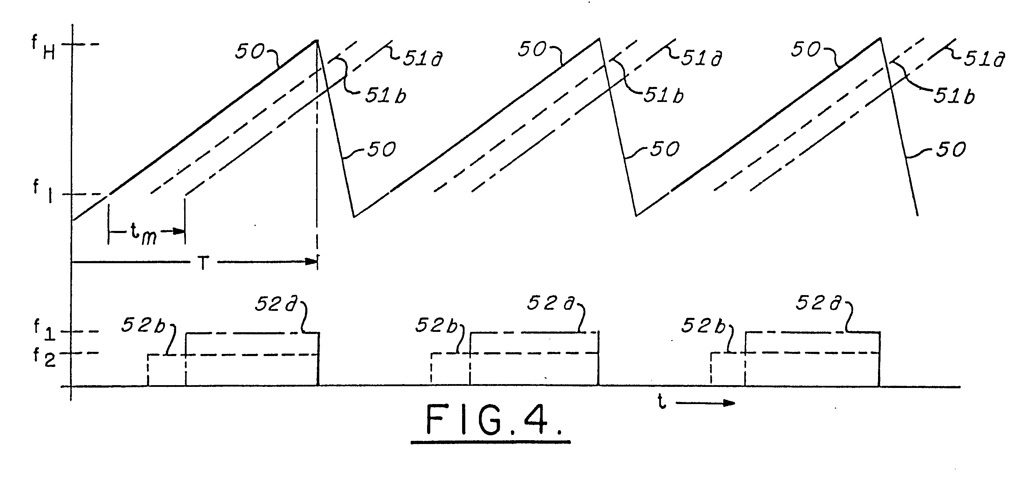

A light beam emitted from the source 41 is incident on the modulator 42, the transmission characteristics of which are instantaneously altered in accordance with the linear FM electric signal coupled thereto from the FM generator 43, propagates therethrough and emerges therefrom with its intensity modulated by the linear FM signal. The electric signal coupled to the modulator 42 may be linearly frequency modulated by a succession of ramp cycles 50 shown in Figure 4. Each ramp cycle causes the light beam emitted from the modulator 42 to be intensity modulated with a linear FM envelope having continuous frequency variations between predetermined limits. This optical signal is coupled to be successively incident on the reflective (14a to 14n) or transmission (34a to 34n) optical devices, and the signals returned by them are coupled to the light detector 46 from which an electrical signal representative of the incident optical signal is coupled to the second terminal of mixer 45. Each of these signals, additionally data amplitude modulated, is also amplitude modulated with the same frequency variations as the modulation amplitude of the incident optical signal. Thus, the detected modulation frequency of each returned optical signal is a frequency-vs-time linear ramp function delayed as compared to the emitted signal by a time interval equal to the round trip, or total propagation time for the particular device (14a to 14n, 34a to 34n) from which it was returned. These detected signals when mixed with the modulating signal from FM generator 43 will provide signals at beat frequencies representative of the respective time delays. Other signals, including those produced by mixing the delayed signals with the retrace of the FM generator and the subsequent modulation ramp will also be present but these spurious signals may be eliminated in variety of ways. One may eliminate ambiguities by coupling a gate signal generator 43a to receive frequency control voltages from the FM generator 43 and to provide gate signals to the cw light source 41 which cause the source 41 to be on only during a preselected frequency interval of each ramp, as for example the interval between $f_L$ and the maximum modulation frequency $f_M$ as shown in Fig. 4. The lower frequency $f_L$ is chosen to eliminate possible beats between the frequency ramp 51a detected as a result of the last returned signal of the FM amplitude modulated incident optical signal and the subsequent amplitude modulating frequency ramp. To eliminate other spurious signals, a gate signal from the gate signal generator 43a may be applied to a gate 45a coupled between the mixer 45 and the filter bank 47 so that beat frequencies are coupled to the filter bank only during the on-time of the cw light source 41. It is to be understood that the frequency sweep time T is very much longer than the maximum return time delay $t_m$. Two delayed signal frequency variations 51a and 51b are shown in figure 4. With gate operation as previously discussed, signals with frequency variations 51a and 51b, when mixed with the frequency ramp 50 coupled from FM generator 43, produce signals 52a and 52b at constant beat frequencies $f_1$ and $f_2$ respectively. For the purpose of explanation, a returned data modulated optical signal, for example the signal with the intensity modulation frequency variation 51a, is assumed to be incident on the light detector 46 at a time $t_m$ after the transmission of the optical signal with intensity modulation frequency variation 50. These signals, the modulation signal 50 and the detected modulation signal 51a, are coupled to mixer 45. Commencing at time $t_m$ and continuing until time T, the signal coupled from mixer 45 to the input terminal 49 of the filter bank 47 is the signal 52a at a constant beat frequcny $f_1$ shown in Figure 4. Similarly, a previously returned FM amplitude modulated optical signal produces the signal 52b at a different constant beat frequency $f_2$.

Data modulation applied at each of the two data modulators from which the frequency ramps 51a and 51b were returned, is now present on the two signals at frequencies $f_1$ and $f_2$. These signals are coupled to filter bank 47 which demultiplexes signals coupled to the input terminals 49 according to their beat frequency. The signals separated by the above method are coupled to output terminals 47a to 47n of the filter bank 47, each of which corresponds to a sensor positioned along the optical fibre and hence to corresponding input terminals of data detector 48, wherein the modulated data from each data modulator is extracted and coupled to utilization devices not shown.

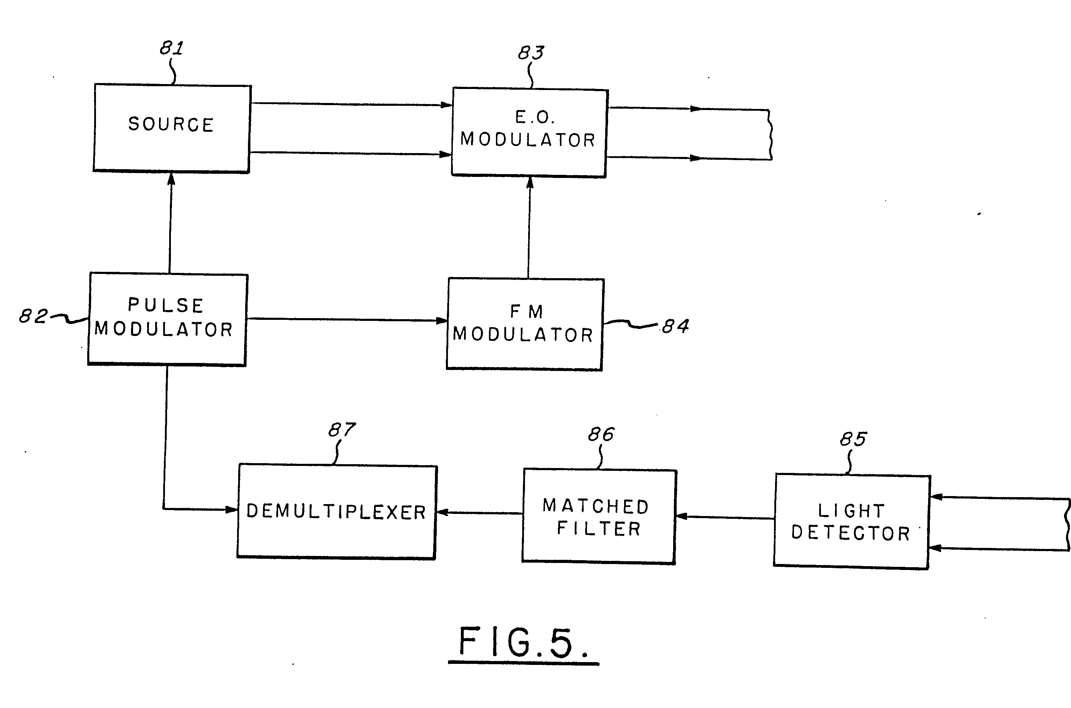

Applications of the invention may exist where narrow pulse widths with extremely high peak intensities are required and a source capable of providing such pulses is not readily available. Pulse energy may be increased for a constant peak power by increasing the pulse width. This, however, decreases the system resolution capability. Techniques, such as pulse compression, exist to provide a pulse of sufficient width with a limited peak intensity to transmit the required energy and after appropriate processing to provide the same resolution as a narrower pulse width. Figure 5 shows a system that may be employed in the present invention to accomplish pulse compression of pulsed optical signals.

Referring to Figure 5, a light source 81 is pulse modulated by modulator 82 to emit a sequence of light beam pulses to be incident on electro-optic modulator 83. Substantially concurrent with the coupling of a pulse to source 81, the modulator 82 couples a trigger pulse to the FM generator 84 initiating the generation of a linear FM signal which is coupled to electro-optic modulator 83 causing the instantaneous optical transmitting characteristics thereof to vary in accordance with the coupled linear FM signal. The light beam that emerges from the electro-optic modulator 83 is amplitude modulated with the pulsed linear FM signal. The optical signal so modulated is incident on the optical fibre (not shown in Figure 5) wherefrom it is successively coupled to the data modulators and returned therefrom to be incident on light detector 85. The light detector 85 provides a sequence of linear FM pulses in response to the incident optical signals each with a pulse width substantially equal to the width of the pulse coupled from the modulator 82 where within the frequency varies linearly with time substantially as the frequency variation within the FM signal coupled from the FM generator 84. This sequence of linear FM pulses is coupled to a matched filter 86 which may be of a known type and which has an impulse response that is the time inverse of each of the pulsed signals in the sequence coupled thereto. The output signal of the matched filter is a sequence of compressed pulses each with a pulse width that is consistent with the frequency bandwidth of the incident linear FM pulses. This sequence of compressed pulses is coupled to the time division demultiplexer 87 where the pulses are channelled as previously described.

## Claims

1.     An information gathering system (10,20) including a multiplexing arrangement to transmit output information from each of a plurality of sensing means
(14,34) to collective receiving circuits (17,18,19), characterised in that the
multiplexing arrangement comprises outward and return signal propagating paths
(13,25,31,3335,36) coupling a signal source (11,12) providing modulated carrier
signals and the receiving circuits (17,18,19) respectively to the sensing means
(14,34), each of which operates to modify and return a received carrier signal
portion with its output information, and in that the total propagation path length
is different for each of the sensing means (14a to 14n, 34a to 34n) thereby to
supply the receiving circuits (17,18,19) with a sequence of modified modulated
signal portions having time delays corresponding to the total propagation path
lengths transversed.

2.     A system as claimed in claim1 in which the outward signal propagating
path and the return signal propagating path each comprise a shared transmission
line (31,36) provided at spaced intervals with branch connections (32,33,35,37)
coupling the appropriate signal portions respectively to and from the sensing
means (34) which are transmissive devices (34a to 34n) whose transmission
coefficient is a function of external information input.

3.     A system as claimed in claim1 in which the outward and return signal
propagating paths comprise a common shared transmission (13) line provided at
spaced intervals with branch connections (15,25) coupling the appropriate signal
portion to and from the sensing means which are reflection devices (14a to 14n)
whose reflection coefficient is a function of external information input.

4.     A system as claimed in any preceding claim in which the carrier signal is
amplitude modulated by a series pulses each of a duration not greater than the
propagation time difference between successively longer total propagation paths.

5.     A system as claimed in any one of claims 1 to 3 in which the carrier signal
is amplitude modulated with a variable frequency signal having repetitive cycles
of linear ramp frequency rises with a rise time greater than the propagation time difference between the shortest and the longest total signal propagation paths, and in which the receiving circuits (17,18,19) include means (45) to mix the returned ramp signal portions with the modulating signal thereby to obtain different beat frequencies corresponding to the signal portions returned from the different sensing means.

6.    A system as claimed in claim 5 which includes a pulse compression arrangement (81 to 87).

7.    A system as claimed in any preceding claim in which the carrier signals are light signals and in which the outward and return signal propagating paths are optical transmission lines (13,15,31,33,35,36).

8.    A system as claimed in claim 7, being an underwater target locating system having a array of acousto-optic transducers (14a to 14n, 34a to 34n) as sensing means.

FIG.1.

FIG.2.

FIG.3.

## FIG.4.

4/5

0033237

FIG.5.

0033237

European Patent
Office

EUROPEAN SEARCH REPORT

Application number

EP 81 30 0316

| Category | Citation of document with indication, where appropriate, of relevant passages | Relevant to claim |
|---|---|---|
| | **DOCUMENTS CONSIDERED TO BE RELEVANT** | |
| X | <u>GB - A - 1 540 907</u> (STANDARD TELE-PHONES) <br><br> * Page 2, lines 50-85; page 2, lines 117-130; figures 2-4; figure 8 * <br> --- | 1-5,7 |
| | <u>US - A - 3 158 830</u> (C.S. CLAY et al.) <br><br> * Column 4, lines 1-47; column 4, line 57 to column 5, line 14; figures 4,5,7 and 8 * <br> --- | 5,6 |
| | ELECTRO-OPTICAL SYSTEMS DESIGN, vol. 8, no. 2, February 1976, CHICAGO (US) <br> F.C. ALLARD: "A fiber optic sonar link", pages 32-35 <br><br> * Page 32, left-hand column, lines 29-42; page 32, middle column, lines 13-29; page 33, lines 11-30; figure 1; figure 2 * <br> --- | 8 |
| P | APPLIED OPTICS, vol. 19, no. 17, September 1980, NEW YORK (US) <br> A.R. NELSON et al.: "Passive multi-plexing system for fiber-optic sensors", pages 2917-2920 <br><br> * Page 2917, right-hand column, line 27 to page 2918, left-hand column, line 6; figure 1 * <br><br> --------- | 1-3,7, 8 |

**CLASSIFICATION OF THE APPLICATION (Int. Cl.³)**

H 04 B 9/00
H 04 J 3/04
G 01 S 15/34

**TECHNICAL FIELDS SEARCHED (Int. Cl.³)**

H 04 B 9/00
H 04 J 3/04
H 04 Q 9/08
        9/00
G 08 C 23/00
G 01 S 15/34

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| | The present search report has been drawn up for all claims | |
| Place of search <br> The Hague | Date of completion of the search <br> 15.04.1981 | Examiner <br> DR. STRASSEN |

EPO Form 1503.1  06.78